(19) Europäisches Patentamt
European Patent Office
Office européen des brevets

(11) **EP 4 545 941 A1**

(12) **EUROPEAN PATENT APPLICATION**

(43) Date of publication:
**30.04.2025   Bulletin 2025/18**

(21) Application number: 23205892.5

(22) Date of filing: **25.10.2023**

(51) International Patent Classification (IPC):
**G01N 17/00** (2006.01)     **G01N 17/02** (2006.01)
**G01N 27/26** (2006.01)

(52) Cooperative Patent Classification (CPC):
**G01N 17/006; G01N 17/02; G01N 27/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB Schweiz AG**
**5400 Baden (CH)**

(72) Inventors:
• **Wawrzola, Grzegorz Piotr**
**25-319 Kielce (PL)**

• **Wang, Daniel-Bo**
**Beijing (CN)**
• **Laitinen, Matti**
**02400 Kirkkonummi (FI)**
• **Tiihonen, Vesa**
**01620 Vantaa (FI)**

(74) Representative: **Wroblewski, Marcin Jan**
**Fert, Jakubiak vel Wojtczak**
**Wróblewski rzecznicy patentowi**
**Sp. P. / ul. Gdanska 126/A103**
**90-520 Lodz (PL)**

(54) **METHOD OF DETECTING ATMOSPHERIC CORROSION FOR ELECTRICAL DEVICES**

(57)     The invention concerns a method of detecting atmospheric corrosion for electrical devices. It comprises monitoring of an electrical state of plurality of metal structures operating as sensing elements embedded in a corrosion sensor. All metal structures have equal dimensions and are made of the same material with the same chemical structure and are placed on non-conductive substrate and located in electrical device. Each metal structure works as single sensing element and its electrical state is monitored. What is more, monitoring of the electrical state of metal structures comprises an assessment of how many of the metal structures have been damaged due to corrosion. The progress of corrosion is assessed by comparison of number of damaged metal structures to threshold values.

EP 4 545 941 A1

**Description**

**Technical field of the invention**

The present invention relates to a method of detecting atmospheric corrosion for electrical devices. The method is used in various types of electrical equipment which are susceptible to atmospheric corrosion. Especially the method is intended for electrical devices which are used in the most aggressive corrosive atmospheres which can be found in power distribution industry, chemical production plants, aircrafts, automotive manufacture, transportation infrastructure, off-shore structures and the construction industry.

**Background of the invention**

Atmospheric corrosion is an electrochemical process of degradation of materials exposed to corrosive atmosphere. The susceptibility of materials to atmospheric corrosion depends on many factors, from which the most important are: type and structure of the material, presence of water, composition of the atmosphere, humidity, ambient temperature. Especially vulnerable to atmospheric corrosion are metals and their alloys, such as copper, aluminum, iron, zinc, nickel, silver, steel, brass, and many others. The most aggressive corrosive atmospheres can be found in power distribution industry, chemical production plants, aircraft, automotive manufacture, transportation infrastructure, offshore structures and the construction industry. These atmospheres are usually rich in many corrosive species, such as for example chlorides, phosphates, nitrates, sulphates, carbonates, sulfur oxides, nitrogen oxides, carbon dioxide, hydrogen sulfide, which together with moisture and oxygen can lead to severe metal corrosion.

Different electronic and electrical equipment is used in each of these environments and, since they consist of various metals and alloys, they are particularly prone to damage due to atmospheric corrosion. Growing complexity and demand on reliability of electronic devices and components make the atmospheric corrosion become an important problem.

In the state of the art, corrosion sensors are known. For example, US8390306B2 discloses an atmospheric corrosion sensor. The corrosion sensor is based on a metal film resistor. Corrosion sensor comprises a set of multiple metal films, with progressively increasing widths. Metal films are seated on a non-conduction material. The corrosion sensor operates such that the resistance of each metal film is measured. Its resistance depends on its spatial dimensions; therefore an atmospheric corrosion influences the metal film spatial dimensions and changes its resistance. The resistance changes due to a reduced conduction path as the width of the metal film is converted from a metal to a nonconductive oxide due to corrosion. As the corrosive gases in the atmospheric environment, in which the sensor operates, attack the metal of the metal film and transform it to a nonconductive oxide, the width is reduced thus increasing the resistance of the metal film. The operation of the corrosion sensor is optimized to work on a relatively low corrosion rate with corrosion product formed at a rate of about 30 nanometers per month or lower. The corrosion sensor is designed to be used in interiors. Hence, when a certain level of corrosion is detected via the sensor response, the atmospheric environment of the interior can be correspondingly regulated. In this solution, also reference sensor element can be used, which is not substantially susceptible to corrosion caused by the atmospheric environment.

Similar principle is realized by a corrosion detection apparatus disclosed in US8723534B2. This apparatus is based on the plurality of metal strips which are located on an insulating surface of a substrate. Each strip has a different thickness to the other. Additionally, metal strips comprise an exposed strip portion that is permeable to a corrosion-accelerating gas and a protected strip portion that is not permeable to the corrosion-accelerating gas. The exposed strip portion and the protected strip portion are connected in a series connection. During the operation of the corrosion detection apparatus the exposed strip portions are corroded due to exposure to corrosion-accelerating gases from the outer surface and inward toward the surface of the substrate. The resistance of an exposed strip portion changes, i.e., increases, as the thickness of a non-corroded portion decreases with the corresponding increase of the thickness of a corroded portion within each exposed strip portion.

Moreover, a method of determining a corrosion for electrical devices based mainly on an electrical resistance type corrosion sensor is disclosed in JP2016138751A. It comprises steps of:

- extracting a first resistance value from the electrical resistance type corrosion sensor,
- extracting an integration time, being operation time of the corrosion sensor,
- extracting reference data of the specified environmental standard,
- estimating electrical device remaining life basing on the extracted first resistance value, integration time, and reference data,
- estimating a remaining life ratio which is a ratio to a remaining life estimated based on a resistance value,
- comparing the calculated remaining life ratio with a preset threshold value,
- outputting a warning based on abovementioned comparison when the threshold value is exceeded.

Steps of the method are realized in an arithmetic processing unit.

Clearly, in the state-of-the-art devices and methods for detecting an atmospheric corrosion based on electrical resistance are known. They are so called continuous method. In this continuous method a single metal layer of predefined thickness is usually used and its electrical resistance is measured so the corrosion progress can be monitored continuously in time. Sometimes another metal layer protected from corrosion is also used to compensate against temperature changes and other environmental factors not related directly to corrosion. The continuous method provides more information but requires costly analog circuit to measure very low resistance changes. Despite the use of high-precision measurement circuit, the sensitivity of such method is often limited by the sensing structure in form of a planar metal layer, nonpermeable for corrosive gases, where only its surface takes a part in the corrosion process.

On the other hand, also so-called discrete method is known. Similarly, to the continuous method it is based on sensors comprising multiple metal layers, which differ in their spatial dimensions, for example in thickness. Their electrical continuity is checked so the corrosion progress can be monitored only in discrete steps. The discrete method requires much lower costs. However, the answer is limited to combination of binary states of each of the used sensors.

## Problem

Known methods and devices for sensing atmospheric corrosion are based on sensing elements having metal layers of different dimensions. In an ideal situation a sensing element with the thinnest metal layer should be destroyed as first, while the thickest as last. Similarly, the resistance in the sensing element with the thinnest metal layer should increase the fastest, while in the thickest should increase the slowest.

However, the corrosion process may affect the sensing elements in random way. Therefore, the ideal established way of destroying of sensing elements or the ideal way of increasing of resistance is not guaranteed in real application. Especially if the sensing elements are affected by different conditions caused for example by not equal humidity caused by condensation of water vapor. The conditions causing corrosion might also significantly differ in various locations, even if they are locations in the same electrical device, i.e. due to unequal distribution of the temperature inside the device, where one sensing element might be placed closer to heat source, while another further.

## The essence of the invention

The invention concerns a method of detecting atmospheric corrosion for electrical devices, comprising monitoring of an electrical state of plurality of metal structures operating as sensing elements, which are placed on non-conductive substrate and located in an electrical device. The essence of the invention is that:

- each metal structure works as single sensing element and its electrical state is monitored,
- monitoring of the electrical state of metal structures comprises an assessment of how many of the metal structures have been damaged due to corrosion,
- wherein all metal structures have equal dimensions and are made of the same material with the same chemical structure,
- assessing the progress of corrosion of the metal parts comprised in the electrical device by comparing number of damaged metal structures to threshold values.

It is good when metal films are used as metal structure.

It is desirable, that the progress of corrosion is assessed with statistical methods on basis on number of damaged sensing elements in comparison to total number of sensing elements located in a specific area of the device.

It is advantageous if continuity of metal films is monitored.

It is also good when groups of sensing elements are located within different locations in a single electrical device.

It is also advantageous if the statistical distribution of damaged metal films over time is used to set threshold values.

## Advantages of the invention

Early detection of an atmospheric metal corrosion which can cause a malfunction of electrical devices is a main advantage of the invention. The invention allows to predict the useful lifetime of electronic and electrical devices in particular environment and to plan service and maintenance actions, in order, to prevent from critical failures and equipment downtimes. All predictions are based on measured atmospheric metal corrosion rate.

Despite the fact, that all metal structures acting as single corrosion sensors are produced with the same material and dimensions and are located inside the same device and are working at least at similar conditions, due to corrosion process not affecting them equally the same, each of the sensing elements will be broken at different time. Physical properties of the sensing elements will change in independent processes. Despite of this fact, it is approximated the time of destruction can be predicted basing on statistical distribution models. Especially time of destruction can be predicted basing on statistical distribution model, especially on Gaussian-like statistical distribution models, for example in a modification of the Gaussian distribution when its negative elements are reset to 0. Hence main group of sensing elements will have similar time of destruction due to corrosion and a part of the sensing elements will suffer destruction earlier, some later than the main group. The statistical distribution of damaged sensing elements over time allows to set a threshold level - a number of sensing elements damaged by corrosion, when a warning or alarm should be raised to inform a service personnel that the corrosion inside the protected device, observed by the corrosions sensor based on multiple sensing elements - metal structures, especially metal films, has reached a level and some action needs to be taken.

The information about the state of each of the sensing element or the structure containing multiple sensing elements might be further used for statistical processing and basing on the statistics, information about the corrosion progress inside the device might be assessed.

Such observation could not be made if the sensing elements were not equal in dimensions and materials, as it would not be clear if the reason for different corrosion time would be caused by difference in metal structures. Therefore, sensing elements of different thickness are not used, so cost of manufacturing of corrosion sensor is also reduced.

Additionally, using multiple corrosion sensors comprising sensing elements of the same type located within different locations in a single electrical device may give information about the location of the damaged sensing elements, which can be combined with analytics concerning the whole series of devices. Therefore, it is possible to indicate parts of the device that are more prone to atmospheric corrosion process basing on statistical information. This information can be used for further fleet analytics and improvement of the next revision of the electrical devices containing the corrosion sensor with sensing elements.

As an example, if sensing elements of the corrosion sensors placed in a given part of the device are always damaged first due to corrosion process, this might be used to point out this section of the device as inadequately protected in comparison with other parts of the device, where other sensing elements are located. Therefore, areas which are more prone to corrosion are detected. It is important circumstance, which can be used during further development of monitored device. As already mentioned, such an observation could not be made if the metal structures were not equal.

All calculations are based on statistical approach. Despite the fact, that statistical calculations might be complicated, in case of detection of an atmospheric metal corrosion quite simple methods can be used. Therefore, when a method is executed, it does not require large computing capacities.

## Description of the drawings

Embodiments of the subject matter of the invention have been presented in the drawing, where:

fig. 1    presents electrical circuit based on multiple corrosion sensors with state of each of them observed separately by a microcontroller;

fig. 2    presents electrical circuit based on multiple corrosion sensors connected within a single monitoring structure;

fig. 3    presents diagram with resistance of single corrosion sensors with the same dimensions and material over time in hours;

fig. 4    groups of sensing elements placed in different areas of protected device in schematical chart.

## Detailed description of the invention

In an example electrical circuit based comprising corrosion sensor with multiple sensing elements has been used in air insulated switchgear. Corrosion sensor may be used in different kinds of electrical devices, especially in industrial drives and drive systems.

Corrosion sensor comprises plurality of sensing elements and electrical state of each sensing element is monitored. The corrosion sensing element is in the form of metal film made of corrodible metal or metals alloy, in particular copper, aluminum, iron, zinc, nickel, silver, steel, and brass. However, other structures of the corrosion sensing elements are possible e.g., metal plate. Corrosion sensor can comprise film of any kind of suitable material, which is prone to an atmospheric corrosion. Especially vulnerable to atmospheric corrosion are metals and their alloys, such as copper, aluminum, iron, zinc, nickel, silver, steel, brass.

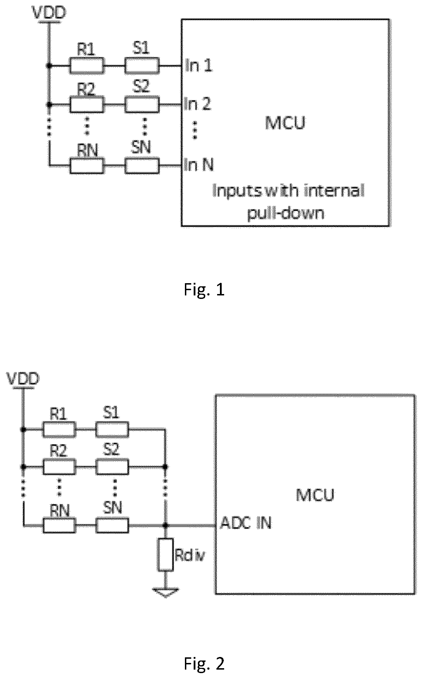

In this embodiment sensing elements have form of metal films made of copper and placed on non-conductive substrate. All metal films have equal spatial dimensions and are made of copper with the same chemical structure. Electrical state of each metal film is monitored. In the first embodiment observation of the state of each of sensing element S1, S2, ... SN (fig. 1) is done with a microcontroller inputs. As the resistance of sensing elements S1, S2, ... SN might be very low, to limit the current flow through them, they are placed in series with resistors R1, R2, ... RN. While metal films are not damaged, there is a connection through the resistor to a supply, so high state might be recognized on the microcontroller input, while after breaking of the metal film due to corrosion, internal pull-down causes detection of low state on microcontroller input.

In the second embodiment observation of the state of each of sensing element S1, S2, ... SN (fig. 2) is done with a common monitoring structure. While sensing elements are not damaged by the corrosion, the relevant resistor is used as a part of parallel connection, and after breaking of corrosion sensor Sx the relevant resistor Rx is no longer used as a part of the monitoring structure, thus the resistance of the parallel connection changes and the voltage observed by the divider which upper part is the parallel connection of all connected resistors, changes.

Above-described monitoring of the electrical state of plurality of metal films operating as sensing elements provides information about the state of each of the metal film that is used for statistical processing. Basing on the statistics, information about the corrosion progress inside the device is assessed.

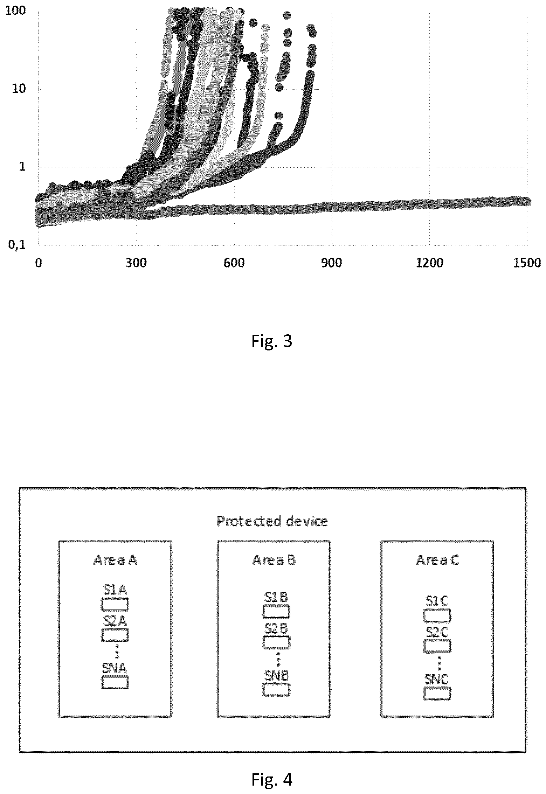

Despite the fact, that all sensing elements are produced with the same material and dimensions, and working at similar conditions, inside the same device, corrosion process is not affecting them equally. Conditions inside the same device may warry for example due to differences in temperature or in humidity. Sensing elements might work in different temperatures, because there might be thermal differences even on single printed circuit board, which might be caused by different distance from heat source. Hence, each of metal film will be broken at different time (fig. 3). The time of destruction is distributed according to statistical distribution model, so a part of the metal films will suffer destruction earlier, some later than the main group which will have similar time of destruction due to corrosion. Therefore, monitoring of the electrical state of metal films comprises an assessment of how many of the metal films have been damaged due to corrosion.

The statistical distribution of damaged sensing elements over time allows to set a threshold level - a number of sensing elements damaged by corrosion, when a warning or alarm should be raised to inform a service personnel that the corrosion inside the protected device, observed by the electrical circuit based on multiple sensing elements, has reached a level when some action needs to be taken.

The progress of corrosion might be assessed on basis on the number of sensing elements affected by corrosion process as a percentage of the total number of sensing elements inside the electrical device. Depending on the type of device, a specific threshold values might be set for different maintenance and operation actions. In the table below, the w, x, y and z represents a percentage of damaged sensing elements, while the relation between them is given by inequality:

$$w < x < y < z$$

| Number of damaged corrosion sensor (%) | Action to be taken |
|---|---|
| w% | Typical maintenance and service. |
| x% | Thorough maintenance. |
| y% | Alert. Turn off the device & thorough maintenance. |
| z% | Second alert. Risk of damage. Immediate thorough maintenance. |

In further embodiment corrosion sensor with plurality of sensing elements has been implemented in an industrial drive system, being a protected device. Sensing elements have been mounted in different areas (fig. 4) of the protected device:

- area A: sensing elements S1A, S2A ... SNA;
- area B: sensing elements S1B, S2B ... SNB;
- area C: sensing elements S1C, S2C ... SNC.

In case when sensing elements located in one of the areas, for example sensing elements S1C, S2C ... SNC located in the area C, are damaged by corrosion at significant shorter time than others, this is an indication that this area is more affected by corrosion process than the other areas within the same device.

**Claims**

1. Method of detecting atmospheric corrosion for electrical devices, comprising monitoring of an electrical state of plurality of metal structures operating as sensing elements, which are placed on nonconductive substrate and located in electrical device,

**characterized in that**:

- each metal structure works as single sensing element and its electrical state is monitored,
- monitoring of the electrical state of metal structure comprises an assessment of how many of the metal structures have been damaged due to corrosion,
- wherein all metal structures have equal dimensions and are made of the same material with the same chemical structure,
- assessing the progress of corrosion of the metal structures comprised in the electrical device by comparing number of damaged metal structures to threshold values.

2. Method according to claim 1, **characterized in that** metal films are used as metal structure.

3. Method according to claim 1 or 2, **characterized in that** the progress of corrosion is assessed with statistical methods on basis on number of damaged sensing elements in comparison to total number of sensing elements located in a specific area of the device.

4. Method according to any claim from 2 to 3, **characterized in that** continuity of metal films is monitored.

5. Method according to any claim from 1 to 4, **characterized in that** groups of sensing elements are located within different locations in a single electrical device.

6. Method according to any claim from 1 to 5, **characterized in that** the statistical distribution of damaged metal structures over time is used to set threshold values.

Fig. 1

Fig. 2

Fig. 3

Fig. 4

Europäisches
Patentamt

European
Patent Office

Office européen
des brevets

# EUROPEAN SEARCH REPORT

**Application Number**

**EP 23 20 5892**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/111229 A1 (HAMANN HENDRIK F [US] ET AL) 24 April 2014 (2014-04-24) * paragraphs [0022], [0024], [0028], [0029], [0032], [0052], [0054]; figure 4 * | 1-6 | INV. G01N17/00 G01N17/02 G01N27/26 |
| X | CN 106 226 226 A (ELECTRIC POWER RES INST OF STATE GRID SHANDONG ELECTRIC POWER CO ET AL) 14 December 2016 (2016-12-14) * paragraphs [0003] – [0013]; figures 1, 2 * | 1-6 | |
| X | US 5 306 414 A (GLASS ROBERT S [US] ET AL) 26 April 1994 (1994-04-26) * claims 1-11; figures 1, 2 * | 1-6 | |
| X | US 9 291 543 B1 (ROBINSON ALEX L [US] ET AL) 22 March 2016 (2016-03-22) * claims 1-22; figure 1 * | 1-6 | |

TECHNICAL FIELDS SEARCHED (IPC)

G01N

The present search report has been drawn up for all claims

| Place of search | Date of completion of the search | Examiner |
|---|---|---|
| The Hague | 8 April 2024 | Martin, Hazel |

EPO FORM 1503 03.82 (P04C01)

## ANNEX TO THE EUROPEAN SEARCH REPORT
## ON EUROPEAN PATENT APPLICATION NO.

EP 23 20 5892

08-04-2024

| Patent document cited in search report | | Publication date | Patent family member(s) | | Publication date |
|---|---|---|---|---|---|
| US 2014111229 | A1 | 24-04-2014 | US 2012038377 | A1 | 16-02-2012 |
| | | | US 2013149195 | A1 | 13-06-2013 |
| | | | US 2014111229 | A1 | 24-04-2014 |
| CN 106226226 | A | 14-12-2016 | NONE | | |
| US 5306414 | A | 26-04-1994 | US 5306414 | A | 26-04-1994 |
| | | | US 5437773 | A | 01-08-1995 |
| US 9291543 | B1 | 22-03-2016 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8390306 B2
- US 8723534 B2
- JP 2016138751 A